# FASCICULE DE BREVET EUROPEEN

(11) **EP 1 191 261 B1**
(45) Date de publication et mention de la délivrance du brevet: **26.05.2004**
(21) Numéro de dépôt: 01121708.0
(22) Date de dépôt: 17.09.2001
(51) Int. Cl.: F16H 63/32

(54) **Fourchette avec dispositif pour transmission d'un mouvement de commande sans jeu**
Schaltgabel mit Einrichtung zur spielfreien Übertragung der Schaltbewegung
Shift fork device for transmitting shift movement without backlash

(30) Priorité: 20.09.2000 FR 0011997
(43) Date de publication de la demande: 27.03.2002
(73) Titulaire: TRW Automotive GmbH, 73553 Alfdorf (DE)
(72) Inventeur: Delépine, Daniel, 45370 Ligny le Ribault (FR)
(74) Mandataire: Degwert, Hartmut, Dipl.-Phys.

(56) Documents cités:
- GB-A- 2 343 227
- US-A- 1 378 222
- PATENT ABSTRACTS OF JAPAN vol. 018, no. 534 (M-1685), 11 octobre 1994 (1994-10-11) & JP 06 185614 A (MITSUBISHI MOTORS CORP), 8 juillet 1994 (1994-07-08)

## Description

La présente invention concerne un dispositif de transmission d'un mouvement de commande essentiellement linéaire à une fourchette montée sur un axe de changement de vitesse dans une boîte de vitesses mécanique, ladite fourchette étant en prise avec un baladeur de déplacement d'un élément d'engrenage, comportant une pièce à encoche dans laquelle s'engage un doigt de sélection animé dudit mouvement de commande.

Un dispositif de transmission d'un mouvement de command ayant les charactéristiques du preambule de la revendication 1 est décrit dans le document JP-A-06 185 614.

Dans une boîte à vitesses classique, le levier de commande manuelle, actionné par le conducteur, met en rotation un doigt de sélection dont le mouvement de commande est transmis à une fourchette montée sur un axe et en prise avec un baladeur, le baladeur étant accouplé à un pignon de la boîte. Lorsque le véhicule est à l'arrêt et la boîte de vitesses donc également, les pignons peuvent se présenter dans des positions relatives ne permettant pas leur engrenage. Dans ce cas, le baladeur correspondant ne peut pas atteindre sa position finale. Pour néanmoins permettre l'engagement de la marche par le levier de changement de vitesse, il est connu de transmettre le mouvement de commande du doigt de sélection d'abord à une pièce à encoche (appelée "crabot" ou "clabot") montée à coulissement limité sur l'axe de changement de vitesse et accouplé à la fourchette par l'intermédiaire d'un ressort hélicoïdal, une goupille bloquant l'ensemble sur l'axe.

L'invention se propose de simplifier le dispositif de transmission entre le doigt de sélection et la fourchette, tout en réduisant considérablement les coûts de production et de montage.

Suivant l'invention, le dispositif de transmission est caractérisé en ce que la pièce à encoche est solidaire de ladite fourchette et ledit doigt de sélection s'engage dans ladite encoche avec un débattement auquel s'oppose un ressort. Le ressort est avantageusement un ressort à lame ayant une branche qui s'étend dans un espace libre entre ledit doigt de sélection et une paroi d'extrémité de ladite encoche.

Dans la forme de réalisation préférée de l'invention, ledit ressort est fixé sur ladite fourchette, et ladite fourchette présente une structure en saillie sur laquelle ledit ressort est engagé à frottement. De préférence, ladite structure en saillie est solidaire de la pièce à encoche qui est également en saillie sur la fourchette. De préférence encore, ledit ressort est constitué par une première section droite formant ladite branche, une deuxième section en arc de cercle reliée à la première section et à une troisième section de courbure opposée à celle de la deuxième, et une quatrième section reliée à la troisième et essentiellement parallèle à la première.

Dans une forme de réalisation alternative de l'invention, ledit ressort présente une joue montée sur ledit axe et accolée latéralement sur ladite fourchette.

D'autres détails et particularités de l'invention ressortiront de la description suivante faite en référence aux dessins annexés, dans lesquels:
La fig. 1 est une vue en perspective d'un dispositif de transmission selon une forme de réalisation préférée de l'invention;
la fig. 2 est une vue en perspective agrandie du dispositif de la fig. 1;
la fig. 3 est une vue en plan d'une forme de réalisation modifiée du dispositif,
la fig. 4 est une vue en élévation du dispositif de la fig. 3 et

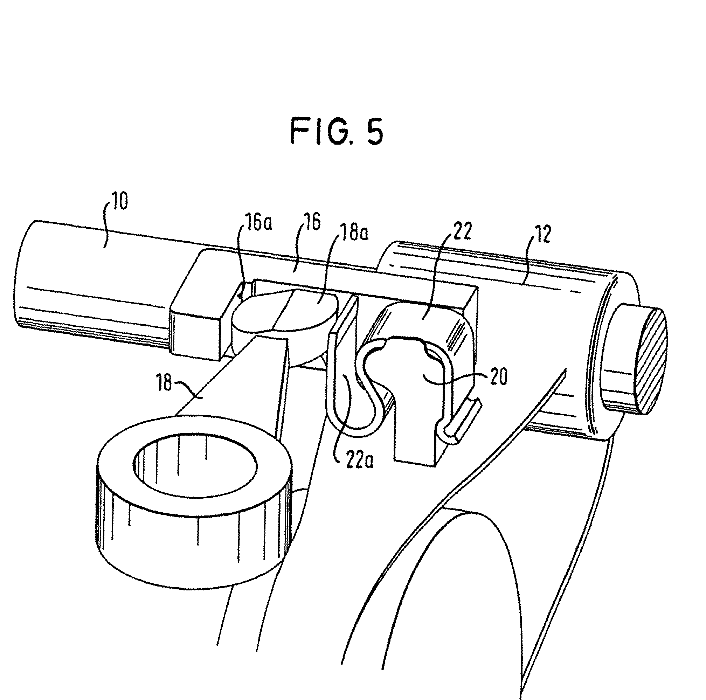

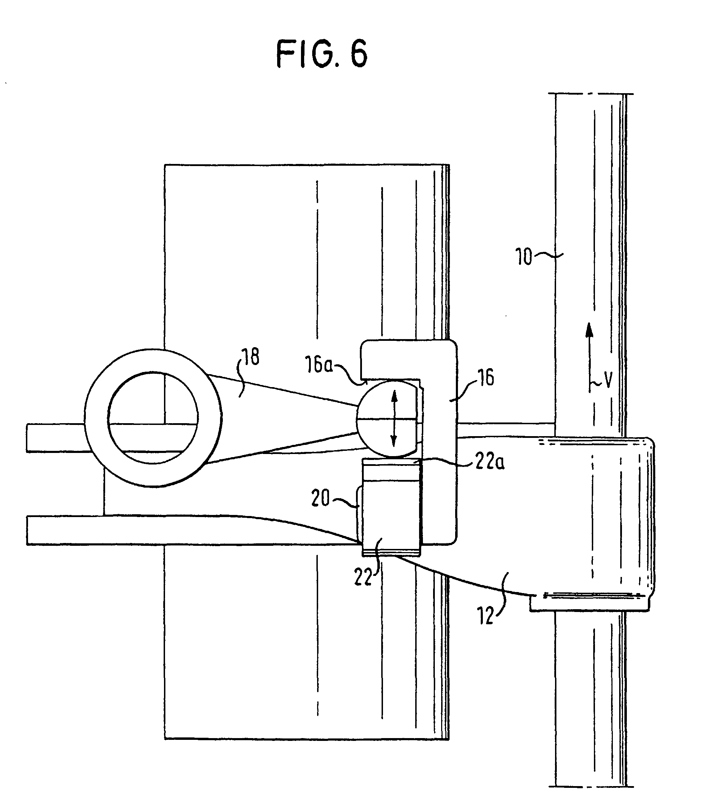

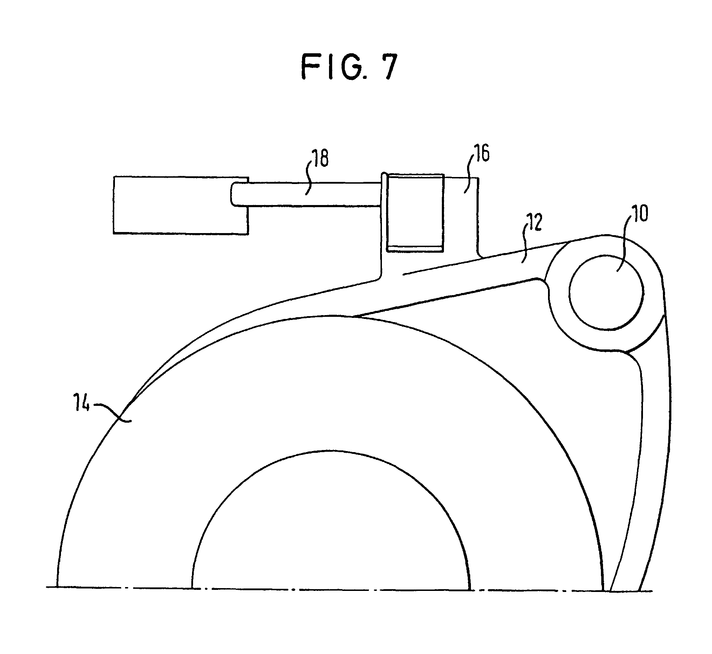

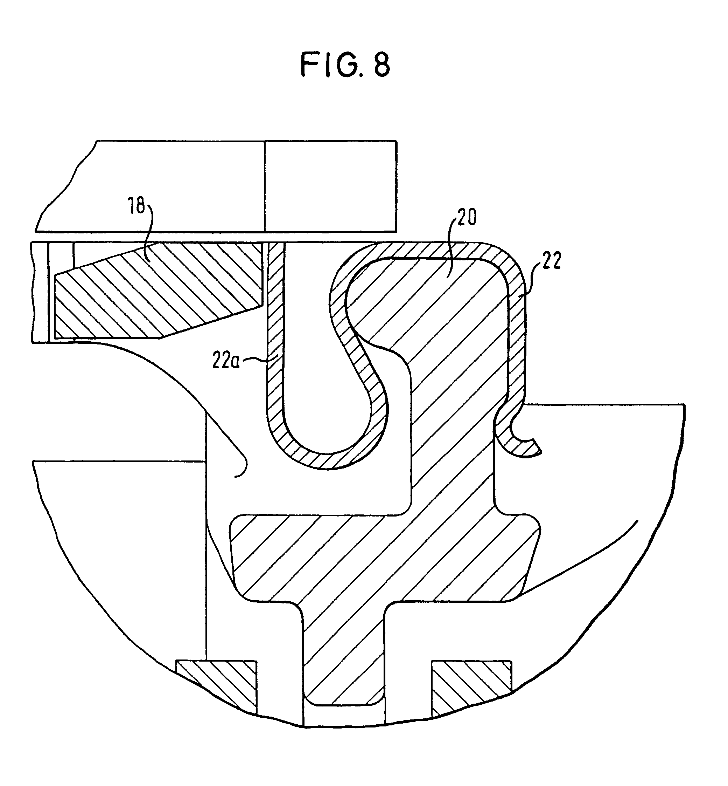

les fig. 5 à 8 sont des vues agrandies montrant les détails de la première forme de réalisation.

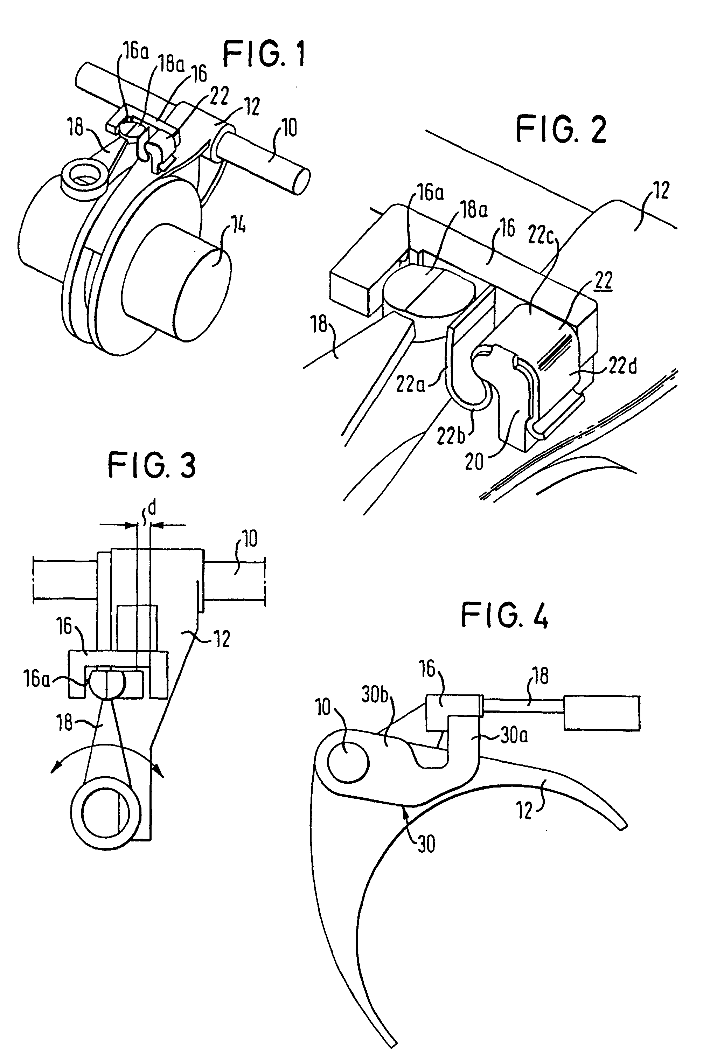

Le dispositif de transmission représenté à la fig. 1 constitue une partie seulement d'une boîte à vitesses mécanique comprenant une série d'engrenages qui sont sélectivement commandés à partir d'un levier de changement de vitesse actionné par le conducteur du véhicule. Plus particulièrement, on voit à la figure 1 un axe 10 de changement de vitesse et une fourchette 12 montée sur cet axe 10. La fourchette 12 est en prise avec un baladeur 14 associé à un pignon non représenté faisant partie d'un engrenage classique. La fourchette 12 est intégralement formée avec une pièce à encoche 16 faisant saillie sur le corps de la fourchette 12 et s'étendant généralement parallèlement à l'axe 10. Un doigt de sélection 18, bloqué sur un levier de commande de vitesses non représenté, présente à son extrémité libre une tête 18a en forme de petit disque qui s'engage dans l'encoche 16a de la pièce à encoche 16, avec un débattement latéral. La pièce à encoche 16 est reliée à la fourchette 12 par l'intermédiaire d'un bloc 20 faisant saillie à la surface de la fourchette 12. Sur ce bloc 20 est engagé à frottement un ressort à lame 22 qui présente une branche 22a s'étendant dans l'espace réservé entre la tête 18a du doigt de sélection 18 et l'extrémité de l'encoche 16a voisine du bloc 20. La branche 22a du ressort à lame 22 permet, à l'état repos, un jeu de fonctionnement du doit 18 dans l'encoche 16 (point mort en position 1ère/2ème). La branche 22a du ressort 22 est essentiellement droite, suivie par une section 22b courbée en arc de cercle, une troisième section 22c engagée autour du bloc 20 et une quatrième section 22d qui s'étend essentiellement parallèlement à la branche 22a, mais avec une orientation opposée à celle de la branche 22a.

En fonctionnement, le doigt de sélection 18 est mis en rotation par le levier de changement de vitesse. La tête 18a du doigt de sélection 18 appuie contre la branche 22a pour transmettre à la fourchette 12 un mouvement de déplacement sur l'axe 10 ou, en cas d'une fourchette bloquée sur l'axe 10, une translation commune de la fourchette 12 et de l'axe 10. La fourchette 12 à son tour, entraîne le baladeur 14 pour déplacer le pignon associé. Toutefois, lorsque la position relative des pignons de la boîte ne permet pas un engagement de l'engrenage, le baladeur 14 est bloqué et la fourchette 12 n'atteint pas sa position finale. Le doigt de sélection 18 comprime alors le ressort 22 pour permettre un engagement complet du levier de changement de vitesse, et le déplacement de la fourchette 12 dans la position finale a lieu sous l'action du ressort 22 dès que la position relative des pignons permet un engagement de l'engrenage.

Dans la forme de réalisation représentée aux fig. 3 et 4, on retrouve l'axe 10 de changement de vitesse, la fourchette 12 montée sur celui- ci et le doigt de sélection 18 engagé dans l'encoche 16a de la pièce à encoche 16, le baladeur commandé par la fourchette 12 n'étant pas représenté pour la simplification du dessin. Cette forme de réalisation se distingue de celle de la fig. 1 et 2 seulement par la forme du ressort et le montage de celui-ci. Plus particulièrement, un ressort à lame 30 présente une branche droite 30a qui s'étend dans l'espace entre la tête 18a du doigt de sélection 18 et l'extrémité opposée de l'encoche 16a. Le ressort à lame 30 est de forme généralement coudée, avec une section principale 30b montée sur l'axe 10 latéralement accolée à la fourchette 12. Le débattement admis pour la tête 18a à l'intérieur de l'encoche 16a est représenté à la fig. 3 par la dimension d.

Le fonctionnement de cette forme de réalisation est identique à celui de la précédente.

## Revendications

1. Dispositif de transmission d'un mouvement de commande essentiellement linéaire à une fourchette (12) montée sur un axe (10) de changement de vitesse dans une boîte de vitesses mécanique, ladite fourchette (12) étant en prise avec un baladeur (14) de déplacement d'un élément d'engrenage, comportant une pièce à encoche (16) dans laquelle s'engage un doigt de sélection (18) animé dudit mouvement de commande, **caractérisé en ce que** la pièce à encoche (16) est solidaire de ladite fourchette (12) et ledit doigt de sélection (18) s'engage dans ladite encoche (16) avec un débattement auquel s'oppose un ressort (22, 30).

2. Dispositif suivant la revendication 1, **caractérisé en ce que** ledit ressort (22) est un ressort à lame ayant une branche (22a) qui s'étend dans un espace libre entre ledit doigt de sélection (18) et une paroi d'extrémité de ladite encoche (16).

3. Dispositif suivant la revendication 2, **caractérisé en ce que** ledit ressort (22) est fixé sur ladite fourchette (12).

4. Dispositif suivant la revendication 3, **caractérisé en ce que** ladite fourchette (12) présente une structure (20) laquelle ledit ressort (22) est engagé à frottement.

5. Dispositif suivant la revendication 4, **caractérisé en ce que** ladite structure (20) est en saillie sur ladite fourchette (12).

6. Dispositif suivant la revendication 5, **caractérisé en ce que** ladite structure (20) en saillie est solidaire de la pièce à encoche (16) qui est également en saillie sur la fourchette (12).

7. Dispositif suivant l'une quelconque des revendications 2 à 6, **caractérisé en ce que** ledit ressort (22) est constitué par une première section droite formant ladite branche (22a) une deuxième section (22b) en arc de cercle reliée à la première section et à une troisième section (22c) de courbure opposée à celle de la deuxième, et une quatrième section (22d) reliée à la troisième et essentiellement parallèle à la première, mais d'orientation opposée à celle de la première.

8. Dispositif suivant la revendication 2, **caractérisé en ce que** ledit ressort (30) présente une joue montée sur ledit axe et accolée latéralement sur ladite fourchette.

## Patentansprüche

1. Vorrichtung zur Übertragung einer im wesentlichen linearen Schaltbewegung auf eine auf einer Schaltgetriebewelle (10) gelagerte Schaltgabel (12) in einem mechanischen Getriebe, wobei die Schaltgabel (12) mit einem Verschiebeglied (14) eines Eingriffselements in Eingriff steht, mit einem ausgesparten Teil (16), in welches ein mit der Schaltbewegung bewegtes Wählglied (18) eingreift, **dadurch gekennzeichnet, daß** das ausgesparte Teil (16) mit der Gabel (12) fest verbunden ist und daß das Wählglied (18) in die Aussparung (16) mit einem Spiel eingreift, dem eine Feder (22, 30) entgegenwirkt.

2. Vorrichtung nach Anspruch 1, **dadurch gekennzeichnet, daß** die Feder (22) eine Blattfeder ist, die einen Schenkel (22a) aufweist, der sich in einen Freiraum zwischen dem Wählglied (18) und einer Außenwand der Aussparung (16) erstreckt.

3. Vorrichtung nach Anspruch 2, **dadurch gekennzeichnet, daß** die Feder (22) an der Gabel (12) befestigt ist.

4. Vorrichtung nach Anspruch 3, **dadurch gekennzeichnet, daß** die Gabel (12) einen Aufbau (20) aufweist, mit dem die Feder (22) in Reibeingriff steht.

5. Vorrichtung nach Anspruch 4, **dadurch gekennzeichnet, daß** der Aufbau (20) auf der Gabel (12) vorsteht.

6. Vorrichtung nach Anspruch 5, **dadurch gekennzeichnet, daß** der vorstehende Aufbau (20) mit dem ausgesparten Teil (16) fest verbunden ist, der ebenfalls auf der Gabel (12) vorsteht.

7. Vorrichtung nach einem der Ansprüche 2 bis 6, **dadurch gekennzeichnet, daß** die Feder (22) aus einem ersten geraden Abschnitt besteht, der den Schenkel (22a) bildet, einem zweiten kreisbogenförmigen Abschnitt (22b), der mit dem ersten Abschnitt und einem dritten Abschnitt (22c) verbunden ist, dessen Biegungsquerschnitt demjenigen des zweiten Abschnitts entgegengesetzt ist, und einem vierten Abschnitt (22d), der mit dem dritten Abschnitt verbunden und im wesentlichen parallel zum ersten Abschnitt, jedoch mit entgegengesetzter Ausrichtung zum ersten Abschnitt ist.

8. Vorrichtung nach Anspruch 2, **dadurch gekennzeichnet, daß** die Feder (30) ein Seitenstück aufweist, das auf der Welle angebracht und seitlich an der Gabel angesetzt ist.

## Claims

1. Device for transmitting an essentially linear control movement to a fork (12) mounted on a gearshift shaft (10) in a mechanical gearbox, said fork (12) being in engagement with a sliding gear mechanism (14) for displacing a gear member, comprising a slotted part (16) in which a selection finger (18) engages to which said control movement is imparted, **characterised in that** the slotted part (16) is integral with said fork (12) and said selection finger (18) engages said slot (16) with a clearance that is opposed by a spring (22; 30).

2. Device according to claim 1, **characterised in that** said spring (22) is a leaf spring having a leg (22a) that extends in a free space between said selection finger (18) and an end wall of said slot (16).

3. Device according to claim 2, **characterised in that** said spring (22) is fixed to said fork (12).

4. Device according to claim 3, **characterised in that** said fork (12) has a structure (20) on which said spring (22) is frictionally engaged.

5. Device according to claim 4, **characterised in that** said structure (20) projects on said fork (12).

6. Device according to claim 5, **characterised in that** said projecting structure (20) is integral with the slotted part (16) which also projects on the fork (12).

7. Device according to any one of claims 2 to 6, **characterised in that** said spring (22) is constituted by a first, straight section forming said leg (22a), a second section (22b) in the shape of a circular arc connected to the first section and to a third section (22c) the curvature of which is opposite to that of the second, and a fourth section (22d) connected to the third and essentially parallel with the first, but the orientation of which is opposite to that of the first section.

8. Device according to claim 2, **characterised in that** said spring (30) has a cheek mounted on said shaft and laterally joined to said fork.
